# EUROPEAN PATENT SPECIFICATION

(11) **EP 4 213 962 B1**
(45) Date of publication and mention of the grant of the patent: **19.02.2025**
(21) Application number: 21786579.9
(22) Date of filing: 20.09.2021
(51) Int. Cl.: B01D 29/52, B01D 29/68, B01D 35/12, B01D 35/147, B01D 37/04

(54) **FILTRATION SYSTEM FOR OIL FILTRATION, PARTICULARLY FOR MARINE UNITS SUCH AS MARINE ENGINES**
FILTRATIONSSYSTEM ZUR ÖLFILTRATION, INSBESONDERE FÜR SCHIFFSEINHEITEN WIE ETWA SCHIFFSMOTOREN
SYSTÈME DE FILTRATION POUR FILTRATION D'HUILE, EN PARTICULIER POUR DES UNITÉS MARINES TELLES QUE DES MOTEURS MARINS

(30) Priority: 21.09.2020 DE 202020105401 U
(43) Date of publication of application: 26.07.2023
(73) Proprietor: Boll & Kirch Filterbau Gesellschaft mit beschränkter Haftung, 50170 Kerpen (DE)
(72) Inventor: FINSEL, Andreas, 50858 Köln (DE); NUSSBAUM, Andreas, 50189 Elsdorf (DE); CARTARIUS, Karsten, 52391 Vettweiß (DE)
(74) Representative: Patentanwälte Buschhoff Hennicke Althaus
(86) International application number: PCT/IB2021/058549
(87) International publication number: WO 2022/058975

(56) References cited:
- WO-A1-2017/085643
- WO-A1-2018/002822
- DE-A1- 102015 102 318

## Description

The invention relates to a filtration system for the filtration of oil, in particular a filtration system for the filtration of oil for marine units such as marine engines, in an oil circuit having a main pump, comprising at least one backflushable main filter, which is arranged in a feed line of the oil circuit and has a filter housing with an oil inlet, a filtrate outlet and a backflush outlet as well as a backflush device, comprising a filtrate line for filtered oil filtrate between the filtrate outlet and the marine unit, comprising a treatment branch for backflush fluid, which is connected to the backflush outlet and has at least one treatment filter with a filter housing, a fluid inlet and a fluid outlet, comprising a plurality of switchable switching valves and comprising at least one pump in the treatment branch between the backflush outlet of the main filter and the fluid inlet of the treatment filter.

Filtration systems in an oil circuit on ships serve to protect the marine unit connected to the filtration system. Filtration systems for oil are used on ships, in particular in the lubricating oil circuit of the marine engines used to propulse the ships, such as, in particular, large diesel engines. Numerous requirements are placed on the filtration system in this case since large volume flows have to be filtered, while even high levels of contamination of the lubricating oil or hydraulic oil have to be reliably removed, and at the same time trouble-free operation of the filtration system is required over long periods of time, to be precise even at extreme or extremely fluctuating temperatures and pressures, since ships may be on the move for weeks with their engines running continuously. Marine engine manufacturers therefore define degrees of purity which must be maintained with such a filtration system, since otherwise it is not possible to achieve certification and approval of the filtration system for engines of this manufacturer.

Numerous solutions and proposals for corresponding filtration systems already exist in the prior art. Reference is made by way of example to WO 2018/002822 A1 of the applicant, and also to JP 2007/125479A or JP 6469198 B1. In all the abovementioned filtration systems, a switchable multi-way valve is arranged upstream of the main filter, and the treatment filter at the same time forms a bypass filter which, if appropriate, assumes sole responsibility for the treatment of the filtrate fed to the marine unit. In normal operation, however, when the main flow filter is receiving a flow, the backflush fluid treated with the treatment filter is fed to the oil sump.

The preamble of the invention is based on WO 2017/085643 A1. In the filtration system of the type in question, a switchable multi-way valve is arranged upstream of the main filter, ensuring that either the main flow filter is supplied directly with oil from the oil sump and the treatment filter performs the treatment of the backflush fluid, or, in a starting phase of an engine, the treatment filter is connected upstream of the main filter in order, particularly in the starting phase of an engine, to filter out to a greater extent impurities, which may also originate from the production of the engine. In this case, a pump arranged in the treatment circuit is used as a means to ensure that, in this switching position of the multi-way valve arranged upstream, the backflush fluid occurring at the main filter can be guided upstream of the treatment filter. In normal operation, on the other hand, the fluid oil treated at the treatment filter is fed to the engine sump or oil sump.

The requirements on filtration systems for marine units are increasing. Some marine engine manufacturers now demand that the filtration systems must be designed to be able to avoid relatively large pressure fluctuations, even in continuous operation. It is true that this would, in principle, be possible with existing filtration systems, provided that disproportionately large filter surface areas are made available, but this is not possible on ships, if only for reasons of space, and overall it is also not economically feasible. It is the object of the invention to further simplify a filtration system for marine units, while at the same time meeting the requirements of the engine manufacturers in terms of degree of purity and degree of separation as well as differential pressures to be maintained, and also to enable maintenance options for the filtration system during operation.

To achieve this object, the invention proposes that the fluid outlet of the treatment filter is connected to the filtrate line, and a switchable multi-way valve having a valve inlet as well as at least one first valve outlet and a second valve outlet is arranged in the treatment branch between the pump and the inlet of the treatment filter, wherein the first valve outlet of the multi-way valve is connected to the fluid inlet of the treatment filter, and the second valve outlet is connected to the feed line upstream of the main filter. In the solution according to the invention, the automatic filter substantially continuously performs the filtration of the oil flowing to the marine unit; the switching over provided in the filtration system of the type in question in order to connect the treatment filter upstream of the main filter is therefore dispensed with. Use is made of the fact that a backflushable main filter (automatic filter) can already meet, and indeed even exceed, requirements with respect to the degree of purity and separation that are demanded by marine engine manufacturers. Since the oil flowing into the marine unit is filtered by means of the main filter (automatic filter) at all times of operation, including in the start-up phase, the filter surface area of the main filter is available at all times of operation. At the same time, the invention makes it possible for the fluid stream treated with the treatment filter likewise to be available to the marine unit as a usable quantity of oil, and therefore the full quantity of oil fed to the main filter is available to the marine unit in normal operation, not only when no backflushing is currently taking place but also during the backflushing phase of the main filter. Since the flush oil treated with the treatment filter is available to the marine unit, and since the filter surface area of the main filter is available at all times, the filter surface area that necessarily has to be provided in the treatment filter can be reduced in comparison with systems in which the treatment filter alone performs the filtration in the start-up phase. There is also no reduction in the quantity of filtered oil available for the marine unit. Unlike in the case of numerous solutions in the prior art, the switchable multi-way valve in the treatment branch makes it possible to maintain, in particular to clean, the treatment filter during operation, or to replace it. In such a case, the untreated flush oil is temporarily directed back upstream of the main filter or the main filter units, or, in the presence of an oil sump, it can also be fed to the latter.

According to a particularly preferred embodiment, the backflushable main filter has a first main filter unit having a backflush device and a second main filter unit having a backflush device, wherein the backflush devices of the main filter units are each assigned to separate backflush outlets, and each backflush outlet is connected to or opens into the treatment branch upstream of the pump by means of a dedicated flushing line, which is provided with a switchable flushing valve. In the event of failure of one of the main filter units, the other main filter unit can then nevertheless ensure that the marine unit is supplied with a sufficient quantity of filtered oil, even if the differential pressure were possibly to increase during operation in the event of failure of one of the main filter units. In the case of two main filter units with separate flushing valves, it is particularly advantageous if a control unit is used as a means of ensuring that at least one of the two switchable flushing valves is closed at any time of operation during operation. With this measure, backflushing effectiveness can be increased and, at the same time, the quantity of flush oil required for backflushing can be reduced.

The configuration of the filtration system is preferably such that the main filter or each main filter unit is designed as an intermittent flusher, wherein backflushing preferably takes place only when the associated flushing valve is open. The configuration of the main filter or the main filter units as intermittent flushers simultaneously opens up additional operating possibilities and operating variants in the treatment branch.

It is particularly advantageous in a manner known per se if the main filter or the main filter units is/are assigned a bypass branch containing a protective filter and an overflow unit having a pressure relief valve, wherein the bypass branch opens into the filtrate line downstream of the protective filter and the overflow unit. Even in the event of failure of both main filter units, a sufficient fluid flow of filtered oil to the marine unit can then be provided, although filtration would in this exceptional case be performed exclusively by the protective filter. According to a variant, it is possible for this purpose to assign a differential pressure monitoring device to the main filter or the main filter units, wherein the pressure relief valve of the overflow unit can be or is activated as a function of the differential pressure determined by means of the differential pressure monitoring device and can be or is opened, in particular by a switching operation, when a preset differential pressure is exceeded. According to an alternative variant, the pressure relief valve of the overflow unit can have an adjusting device for a trigger pressure, wherein the pressure relief valve opens automatically when the trigger pressure is exceeded. For this purpose, it is possible, in particular, for the adjusting device to have a compression spring whose prestress can be adjusted by means of the adjusting device. In both variants, it is particularly advantageous if the overflow unit is assigned a detection unit, by means of which opening of the pressure relief valve can be detected, wherein it is preferably possible for each opening operation to be transmitted to a control device. In an evaluation, each opening operation can then be traced at any time and analyses can be carried out; if appropriate, it is also possible to determine how long the overflow unit was active or opened. In numerous cases, however, the knowledge that the overflow unit had opened is already sufficient for maintenance to be carried out.

The filtration system would make it possible to manage without an oil sump. However, an oil sump is usually interposed in the oil circuit between the marine unit and the feed line; if there is an oil sump, it is possible, according to one embodiment, for the second valve outlet of the multi-way valve in the treatment branch to open directly into the feed line upstream of the main pump. According to an alternative configuration of a filtration system with an oil sump in the oil circuit, the second valve outlet of the multi-way valve in the treatment branch can open directly into the oil sump, to which the feed line provided with the main pump is also connected.

In order not only to meet but to exceed the requirements of engine manufacturers for degrees of purity, it is particularly advantageous if the main filter or the main filter units has/have one or more filter elements having a filter medium with a beta value, i.e. the ratio between the number of particles of a particular, identical size upstream and downstream of the filter respectively, of at least β₆ ≥ 8; it might be sufficient, if the filter medium has at least β₆ ≥ 10, or β₆ ≥ 20, and/or if the treatment filter has a filter element having a filter medium with a beta value of at least β6 ≥ 8, or β6 ≥ 10, or of β6 ≥ 20, or even of β6 ≥ 75. If an overflow unit with a protective filter is present, it is particularly advantageous if the protective filter has a filter medium with a filter fineness of ≤ 25 mm (micrometres).

Since the requirements of many engine manufacturers for normal operation are exceeded when the main filter units are equipped with a filter medium of at least β6 ≥ 8 or even β6 ≥ 10, the separation performance for all operating states can be met with the main filter. With the backflushable main filter units, long service lives can easily be achieved without the need to change the filter. Since the removal of the impurities from the overall system takes place in the treatment filter, there is a high degree of flexibility and adaptability with respect to the size of the treatment filter, as a result of which the overall area on the ship required for the filtration system can be further reduced. By means of the pump connected upstream of the treatment filter, the absorption capacity of the treatment filter is additionally increased, it being sufficient to design the flushing pump for relatively small delivery rates since the flushing pump connected upstream of the treatment filter does not have to be able to handle the delivery rate of the main flow at any time of operation.

In a particularly expedient configuration, the main filter or each main filter unit in each case preferably has just one filter cartridge having, as a backflush device, a backflushing member which is arranged in the interior of the filter cartridge in such a way that it can be rotated about a central axis of the filter cartridge, wherein the backflushing member is preferably coupled to a rotary drive, in particular an electric motor as a rotary drive. It is then particularly advantageous if the rotary drive, or a control device for the rotary drive, is coupled to the flushing valve or flushing valves in such a way that the duration of opening of the flushing valve per opening operation is matched to the duration of rotation of a 360° rotation of the backflushing member in the filter cartridge.

In particular, if the main filter or the main filter units is/are designed as intermittent flushers, it is possible, according to one advantageous configuration, for the treatment filter to have or form a sedimentation chamber and preferably to have a replaceable filter basket closed at the bottom, an inflow opening arranged above the filter basket, and a collecting space for filtrate surrounding the filter basket. The provision of sedimentation significantly increases the dirt absorption capacity and thus also the service life of the treatment filter. At the same time, the sedimentation makes it possible to further increase the degree of fineness of the treatment filter, possibly even to β6 ≥ 100.

Further advantages and configurations of a filtration system according to the invention will become apparent from the following description of advantageous exemplary embodiments shown in the drawing. In the drawing:
- **Fig. 1**: shows a schematic diagram of a filtration system according to the invention for an oil circuit for marine units in normal operation;
- **Fig. 2**: shows schematically the filtration system of **Fig. 1** during the backflushing process of the first main filter unit;
- **Fig. 3**: shows schematically the filtration system from **Fig. 1** during the backflushing process of the second main filter unit;
- **Fig. 4**: shows schematically the filtration system from **Fig. 1** during the backflushing process of the first main filter unit and with the treatment branch shut off;
- **Fig. 5**: shows schematically a highly simplified longitudinal section of a preferred exemplary embodiment of a main filter;
- **Fig. 6**: shows schematically a highly simplified longitudinal section of a preferred exemplary embodiment of a treatment filter with a sedimentation chamber;
- **Fig. 7**: shows a schematic diagram of a filtration system according to the invention for an oil circuit for marine units with an oil sump during the backflushing process of the first main filter unit according to a first embodiment variant; and
- **Fig. 8**: shows a schematic diagram of a filtration system according to the invention for an oil circuit for marine units with an oil sump during the backflushing process of the first main filter unit according to a second embodiment variant.

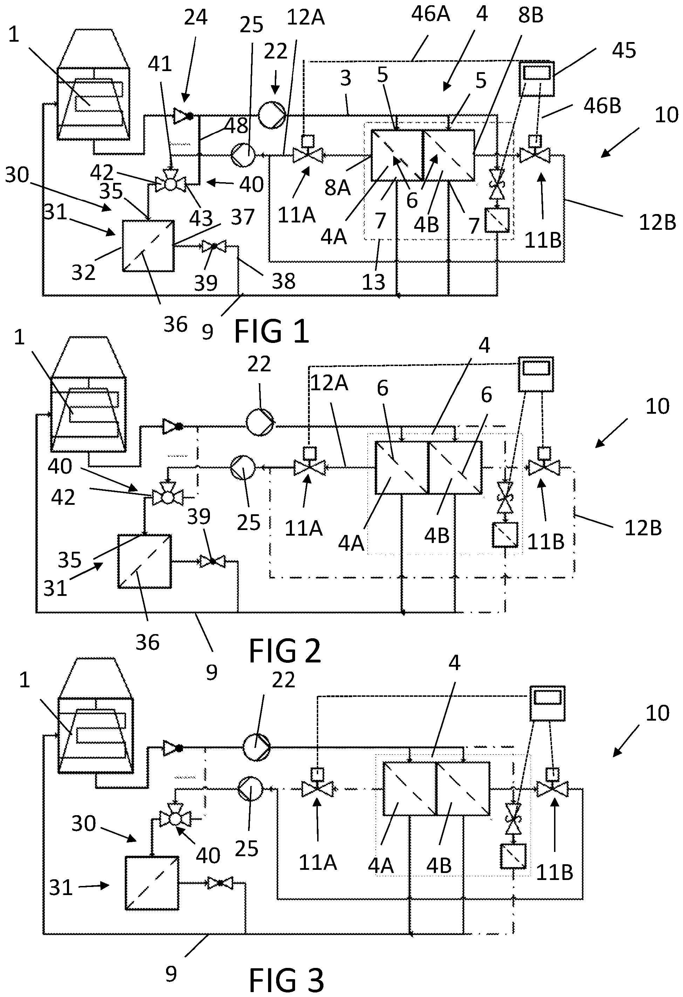

In Figures 1 to 4, reference sign 10 designates overall a filtration system according to the invention for an oil circuit for a marine unit 1. The oil circuit shown in the diagram has a main pump 22 in a feed line 3 starting from the marine unit 1, by means of which oil is fed to a main filter 4 downstream of the marine unit 1. In the exemplary embodiment shown, the main filter 4, which is indicated as a unit by the dashed line, is embodied with two main filter units 4A, 4B, which can have an identical structure to one another, each of the two main filter units 4A, 4B having an oil inlet 5, which is only indicated, a suitable filter medium 6, a filtrate outlet 7 and a backflush outlet 8A at the first main filter unit 4A and a backflush outlet 8B at the second main filter unit 4B. The dashed line at the same time symbolizes a standard housing 13 of the main filter 4. In the exemplary embodiment shown, the filtrate outlets 7 of the two main filter units 4A, 4B are connected via intermediate lines to a filtrate line 9, via which the oil filtrate filtered by means of the main filter 4 or the main filter units 4A, 4B is fed to the marine unit 1, in the exemplary embodiment shown directly. The filter medium 6 in the two main filter units 4A, 4B can be backflushed with a suitable backflush device, as will be explained later, and for the backflush fluid (flush oil) occurring at the backflush outlet 8A or backflush outlet 8B of the main filter 4, a treatment branch 30 is provided, here with an individual treatment filter 31. The treatment filter 31 in the treatment branch 30 likewise has a filter housing 32 and a suitable filter element or filter medium 36 between the fluid inlet 35 and the fluid outlet 37 of the treatment filter 31.

A multi-way valve 40 is connected upstream of the treatment filter 31 in the treatment branch 30, this multi-way valve 40 having a valve inlet 41, a first valve outlet 42 and a second valve outlet 42 and preferably consisting of a 3/2-way valve. The fluid outlet 37 of the treatment filter 31 is connected to the filtrate line 9 via an intermediate line 38, the intermediate line 38 being provided with any desired shut-off member 39. The first valve outlet 42 of the switchable multi-way valve 40 in the treatment branch 30 is connected to the fluid inlet 35 of the treatment filter 31. The valve inlet 41 of the switchable multi-way valve 40 is in turn fed with backflush fluid or flush oil with the interposition of a pump 25, provided that the backflush device of one of the two main filter units 4A, 4B is currently in operation. Since both main filter units 4A, 4B are embodied as intermittent flushers, which do not backflush the filter medium 6 continuously but only at certain periods of time, correspondingly backflush fluid is also not present continuously in the treatment branch 30. Backflush fluid actually only arises when either the flushing valve 11A arranged between the backflush outlet 8A and the pump 25 is open or when a flushing valve 11B interposed between the backflush outlet 8B of the main filter unit 4B and the pump 25 is open. The supply line between the flush oil outlet 8A, 8B and the pump 25 is in each case effected via associated flushing lines 12A and 12B, respectively, in which the respective flushing valve 11A, 11B is arranged accordingly. The flushing valves 11A, 11B, in turn, are connected to a control unit 45, which in this case is central, via two electronic control lines 46A, 46B or via a radio link in order to ensure that, during operation, either neither of the flushing valves 11A, 11B is open at a specific time of operation and, in this respect, no backflushing takes place, or at least only one of the two flushing valves 11A, 11B is open; the control unit 45 therefore also monitors that at least one of the two flushing valves 11A, 11B is closed. The second valve outlet 43 of the switchable multi-way valve 40 in the treatment branch 30 is connected via an intermediate line 48 to the feed line 3, but upstream of the pump 22 and downstream of a suitable shut-off member 24 or backflow blocking member.

A filtration system 10 of the abovementioned construction permits numerous advantageous modes of operation. Fig. 1 shows only an overall diagram with all system components. Fig. 2 shows the filtration system 10 in an operating state in which the filter medium 6 of the main filter unit 4A is being partially backflushed, whereas the entire filter surface area of the filter medium 6 of the main filter unit 4B is completely available for filtering the quantity of oil fed to the marine unit 1 via the filtrate line 9. In the diagram according to Fig. 2, those lines which are closed off and through which no oil is flowing are shown in dot-dash lines, whereas lines through which at least a partial flow of oil is flowing are shown in solid lines. Since flushing valve 11A is open, flushing valve 11B is accordingly closed and no fluid is flowing through flushing line 12B, unlike through flushing line 12A. The backflush fluid (flush oil) passes via the pump 25 with correspondingly increased pressure to the multi-way valve 40 and via the valve outlet 42 of the latter to the fluid inlet 35 of the treatment filter 31. The flush oil is appropriately treated with the filter medium 36 of the treatment filter 31 and is fed to the filtrate line 9 when the shut-off member 39 is open. At a certain point in time, therefore, owing to this mode of operation, the entire fluid flow delivered by the main pump 22 is available to the marine unit 1, although one of the two main filter units, namely here main filter unit 4A, is partially in the backflushing mode.

Fig. 3 illustrates the backflushing of main filter unit 4B by means of a comparable diagram. Flushing valve 11B is correspondingly open, and flushing valve 11A is closed. The backflush fluid occurring at main filter unit 4B is fed via the pump 25 and the switchable multi-way valve 40 to the treatment filter 31 in the treatment branch 30 and is, in turn, available to the marine unit 1 via the filtrate line 9.

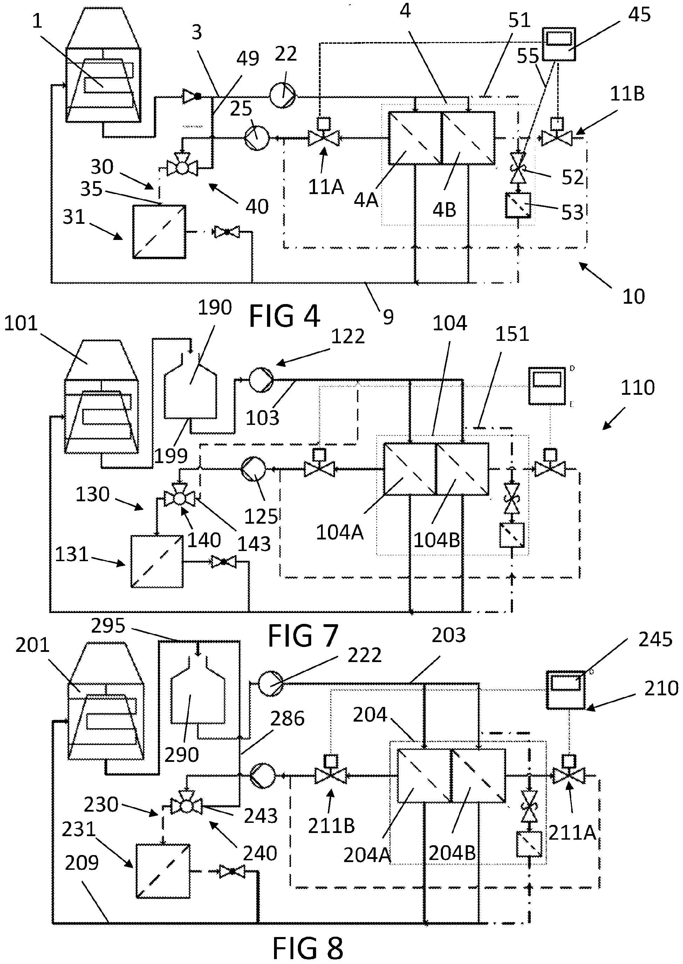

In the diagram according to Fig. 4, a special operating case is illustrated, namely when the filter capacity of the treatment filter 31 in the treatment branch 30 is exhausted. As a result of the switchable multi-way valve 40 connected upstream of the fluid inlet 35 on the treatment filter 31 in accordance with the invention, any fluid supply to the treatment filter 31 can be interrupted in this case and instead the multi-way valve 40 is in a switching position in which the backflush fluid, which in the diagram according to Fig. 4 originates from main filter unit 4A similarly to Fig. 1, is returned untreated via a connecting line 49 to the feed line 3 upstream of the main pump 22. Here, too, the control unit 45 serves to ensure that only flushing valve 11A is open, whereas at the same time flushing valve 11B is closed. In the corresponding switching state of the switching valve 40, the treatment filter 31 can be cleaned or exchanged, specifically during operation of the marine unit 1 and of the entire filtration system 10.

The main filter 4 with the two main filter units 4A, 4B additionally has a bypass branch 51 with an overflow valve 52, which is now explained with reference to Fig. 4. A protective filter 53 is connected downstream of the overflow valve 52 in order to ensure that in no case is unfiltered fluid fed to the marine unit 1. The bypass branch 51 with the overflow valve 52 and the protective filter 53 can be arranged in the housing 13 of the main filter. The pressure relief valve 52 forms an overflow unit, wherein it preferably consists of a spring-loaded pressure relief valve (not shown) in which the spring forms the adjusting device in order to be able to adjust the trigger pressure at which the pressure relief valve 52 opens by means of the spring. The pressure relief valve 52 of the overflow unit thus opens only when the differential pressure at the two main filter units 4A, 4B exceeds a preset value. The bypass branch 51 opens into the filtrate line 9 only downstream of the protective filter 53. In Fig. 4, a signal line 55 is additionally indicated, by means of which each opening of the pressure relief valve 52 can be detected by means of the control unit 55 and can be noted in the control unit 45 for later analyses.

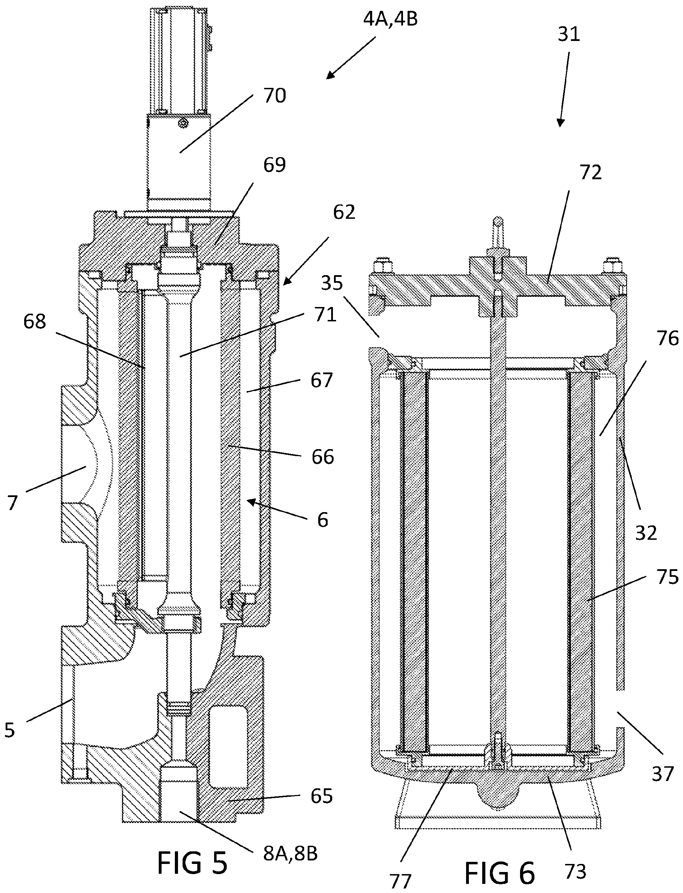

As already mentioned, the main filter 4 or each main filter unit 4A, 4B is in each case an intermittent flusher with backflushing device, and the treatment filter 31 is preferably a simplex filter with sedimentation chamber, which cannot be backflushed. A preferred configuration of a main filter unit is illustrated in Fig. 5, and a preferred configuration for a treatment filter 31 is illustrated in Fig. 6. Reference is now made first of all to Fig. 5.

Fig. 5 shows one of the two main filter units 4A or 4B by way of example. The main filter unit 4 has a multi-part filter housing 62, and a single cylindrical filter cartridge 66, which forms the filter medium 6 with its circumferential wall, is arranged in the interior of the filter housing 62. The oil to be filtered flows via the bottom region of the filter housing 62 into the interior of the filter cartridge 66, for which reason, for the sake of clarity, the reference numeral 5 for the filter inlet is assigned to the corresponding connection flange on the filter housing 62. All oil which passes as filtrate through the filter wall or the filter medium 6 into an annular space 67 in the housing 62 surrounding the filter cartridge can be removed via the filtrate outlet 7 and can then be fed to the filtrate line in the oil circuit and thereby to the marine unit. The filter cartridge 66 is open at least at its lower end so that oil can enter the interior of the filter cartridge 66. Arranged in the interior of the filter cartridge 66 is a backflushing member 68, which here extends over the entire height of the filter cartridge 66 and is coupled for conjoint rotation to a rotary drive 70, which here is electric and is flange-mounted on a cover part 69 of the housing 62 of the main filter unit 4A, 4B. The activation of the rotary drive 70 can take place in such a way that the flushing member 68 rotates continuously in the interior of the filter cartridge 66. Since the flushing member 68 extends with a slotted opening (not illustrated) up to close to the inner side of the circumferential wall of the filter cartridge 66 forming the filter medium 6, this has the advantage that this movement, together with eddy flows caused by the movement, very largely prevents adherence of larger particles to the filter wall of the filter cartridge 66. If the differential pressure between the filter inlet 5 and the filtrate outlet 7 now exceeds a preset value, which can be detected by means of the control device (45, Figs 1-4), or can also be triggered automatically under differential pressure control, then the flushing valve (11A, 11B, Figs 1-4) assigned to the respective main filter unit opens in order to initiate backflushing. With the control device, in turn, the opening duration of the flushing member can be set as a function of the rotational speed of the rotary drive 70 in such a way that the opening duration corresponds approximately to a 360° rotation of the backflushing member 68. Since the backflushing member 68 consists only of a, for example, strip-shaped chamber with a slotted opening, the remaining filter surface area of the filter cartridge 66 which is not directly covered by the backflushing member 68 can simultaneously continue to filter fluid which enters the filter housing 2 via the filter inlet 5, whereas only a partial flow occurs as backflush fluid, specifically only during the backflushing process. The backflush fluid, in turn, can be fed via an inner channel (not shown) in the rotary shaft 71, which is coupled for conjoint rotation to the rotary drive 70 and the backflush member 68, to a backflush outlet 8A, 8B, which is here located correspondingly in a bottom section 65 of the housing 2 of the main filter unit 4A, 4B.

Reference is now made to Fig. 6, with a schematically illustrated exemplary embodiment of a treatment filter 31. This also has a multi-part housing 32, and, as in the diagrams in Figs 1 to 4, the fluid inlet is arranged close to a cover part 72 of the housing 32 and is designated by reference numeral 35, and the fluid outlet is arranged close to a bottom trough 73 on the housing 32 and is designated by reference numeral 37. The fluid inlet 35 is situated high up in an upper section of the filter housing 32 close to the cover part 72, and the fluid outlet 37 is correspondingly situated in a lower section close to the bottom trough 73. In the exemplary embodiment shown, the filter medium 36 consists of the circumferential wall of a filter basket 75 which is closed at the bottom and extends over a relatively large height within the filter housing 32. In the exemplary embodiment shown, the filter basket 75 has a bottom closing plate 77; on the other hand, the filter basket 75 is open at the upper end. Flush oil, which flows via the fluid inlet 35 only at intervals into the housing 32 of the treatment filter 31, runs from above slowly and uniformly into the interior of the filter basket 75. As a result of this inflow guidance, heavier residues, which enter the treatment filter 31 or the filter basket 75 together with the backflush fluid, can be deposited on the bottom of the filter basket 75 by sedimentation, since the treatment filter 31 as a whole simultaneously performs the function of a sedimentation chamber. An annular space 76 extends over the entire height of the filter basket 75 within the filter housing 32. The partial flow which passes into the annular space 76 can in turn be discharged via the fluid outlet 37 and fed to the filtrate line in the filtration system.

The filter media 6 in the main filter units 4A, 4B, on the one hand, and the filter medium 36 in the treatment filter 31, on the other hand, are preferably selected in such a way that filter elements with a filter medium of at least β₆ ≥ 10 are used in the main filter, and a filter element 75 which either has the same filter fineness or even has a better filter fineness, such as, for example, β₆ ≥ 75, is used in the treatment filter 31. In such a system, a continuous improvement of the oil quality of the circulating oil (fluid) then takes place. Replacement of the filter element 75 of the treatment filter 31 in the treatment branch 30 takes place only after certain operating times.

Figs 1 to 4 illustrate a filtration system without an oil sump. The advantages which result from the construction according to the invention of a filtration system having a main filter or main filter units and a treatment branch and the correspondingly arranged switching elements can also be implemented together with an oil sump. Fig. 7 shows a first configuration of a filtration system 110, which is of substantially the same construction as in the exemplary embodiment according to Figs 1 to 4, for which reason functional elements of the same type are shown with reference signs increased by 100. As in the previous exemplary embodiment, the oil flowing in the oil circuit in the feed line 103 is filtered by means of a main filter 104, which, here too, may have two main filter units 104A, 104B, which are each provided with a backflush device. As in the previous exemplary embodiment, the main filter 104 has a bypass branch 151, and a treatment branch 130 with a treatment filter 131, upstream of which a pump 125 and a switchable multi-way valve 140 are connected, is provided for treating the backflush fluid. Oil filtered by means of the main filter 104 is fed to the marine unit 101 via the filtrate line 109. The first valve outlet of the multi-way valve 140 or the filter outlet of the treatment filter 131 connected downstream of the multi-way valve 140 also opens into the filtrate line 109. The deviation from the previous exemplary embodiment consists essentially only in the presence of an oil sump 190, into which fluid is introduced downstream of the marine unit 101, and from which oil is removed and fed to the main filter 104 via the feed line 103 by means of the main pump 122. As is well illustrated in Fig. 7, the second valve outlet 143 is here connected to the feed line 103, although upstream of the main pump 122. A backflow blocking member 199 prevents oil from flowing back into the oil sump 190 when the valve outlet 143 is open. Otherwise, the individual functional elements can be designed as in the previous exemplary embodiment, for which reason reference is made to the previous description.

Fig. 8 also shows a modified exemplary embodiment of a filtration system 210, which, as in the last-described embodiment, is again provided with an oil sump 290. Here too, functionally identical elements are provided with reference signs increased by 100, and there are again a feed line 203 with a main pump 222, a main filter 204 with two main filter units 204A, 204B, a control unit 245 for controlling flushing valves 211A, 211B, and a treatment branch 230 with a treatment filter 231 and a switchable multi-way valve 240 arranged upstream of the treatment filter 231. The second valve outlet 243 of the multi-way valve, like the feed line 295 between the marine unit 201 and the oil sump 290, leads via a connecting line 286 into the oil sump 290. In the exemplary embodiment shown, the feed line 203 to the main filter 204, in which the main pump 222 is also arranged, is then connected to the bottom of the oil sump 290. A backflow blocking element is not absolutely necessary here. Here too, fluid filtered by means of the main filter 204 is fed to the marine unit 201 via the filtrate line 209, into which the first valve outlet of the multi-way valve 240 or the filter outlet of the treatment filter 231 connected downstream of the multi-way valve 240 also opens.

Numerous modifications, which are intended to fall within the scope of protection of the appended claims, are apparent to a person skilled in the art from the preceding description. The construction indicated in the diagram is essential for the operation of the filtration system. The main filter units may each have only a single filter element, a single main filter could be provided, or more than two main filter units could also be provided. The exemplary embodiment of a main filter unit shown in Fig. 5 is only illustrative. The main filter unit could also have a plurality of filter elements in a single housing, as is known per se to a person skilled in the art. It would also be possible to provide only a single main filter with a single filter element. Additional coarse filters or shut-off members could be arranged in the entire circuit, even if efforts are being made to manage with as few switching members and shut-off members as possible, including non-return valves.

The invention is not restricted to the embodiments of filtration systems which are described above. Individual features of the respective embodiments could also be combined with one another, even if this is not expressly mentioned with reference to the figures. In addition, individual elements, insofar as they do not have a direct functional relationship with other individual elements, can also be omitted without departing from the scope of protection and the disclosure of the application.

## Claims

1. Filtration system for the filtration of oil, in particular for marine units such as marine engines, in an oil circuit having a main pump (22; 122; 222), comprising at least one backflushable main filter (4; 104; 204), which is arranged in a feed line of the oil circuit and has a filter housing with an oil inlet, a filtrate outlet and a backflush outlet as well as a backflush device, comprising a filtrate line (9; 109; 209) for filtered oil filtrate between the filtrate outlet (7) and the marine unit (1; 101; 201), comprising a treatment branch for backflush fluid, which is connected to the backflush outlet (8A) and has at least one treatment filter (31; 131; 231) with a filter housing (32), a fluid inlet (35) and a fluid outlet (37), comprising a plurality of switchable switching valves and comprising at least one pump (25; 124) in the treatment branch between the backflush outlet and the fluid inlet, **characterized in that** the fluid outlet (37) of the treatment filter (31; 131; 231) is connected to the filtrate line (9; 109; 209), and a switchable multi-way valve (40; 140; 240) having a valve inlet (41) as well as at least a first valve outlet (42) and a second valve outlet (43; 143; 243) is arranged in the treatment branch (30; 130; 230) between the at least one pump (25; 125) in the treatment branch and the fluid inlet (35) of the treatment filter, wherein the first valve outlet (42) of the multi-way valve is connected to the fluid inlet (35) of the treatment filter (31), and the second valve outlet (43; 143; 243) is connected to the feed line (3; 103; 203) upstream of the main filter (4), upstream of the main pump (22; 122) and downstream of a suitable shut-off or backflow blocking member (24; 199).

2. Filtration system according to Claim 1, **characterized in that** the backflushable main filter (4) has a first main filter unit (4A; 104A; 204A) having a backflush device and a second main filter unit (4B; 104B; 204B) having a backflush device, wherein the backflush devices of the main filter units are assigned to separate backflush outlets (8A; 8B), and each backflush outlet is connected to the treatment branch (30; 130; 230) upstream of the pump by means of a flushing line (12A; 12B), which is provided with a switchable flushing valve (11A; 11B).

3. Filtration system according to Claim 2, **characterized in that** a control unit (45; 245) is used as a means of ensuring that at least one of the two switchable flushing valves (11A; 11B) is closed at any time of operation during operation.

4. Filtration system according to any of Claims 1 to 3, **characterized in that** the main filter (4) or each main filter unit (4A; 4B) is designed as an intermittent flusher, wherein backflushing preferably takes place only when the associated flushing valve (11A; 11B) is open.

5. Filtration system according to any of Claims 1 to 4, **characterized in that** the main filter or the main filter units is/are assigned a bypass branch (51) containing a protective filter (53) and an overflow unit having a pressure relief valve (52), wherein the bypass branch (51) opens into the filtrate line (9) downstream of the protective filter (53) and the overflow unit.

6. Filtration system according to Claim 5, **characterized in that** a differential pressure monitoring device is assigned to the main filter or the main filter units, wherein the pressure relief valve of the overflow unit can be or is activated as a function of the differential pressure determined by means of the differential pressure monitoring device and can be or is opened when a preset differential pressure is exceeded.

7. Filtration system according to Claim 5, **characterized in that** the pressure relief valve of the overflow unit has an adjusting device for a trigger pressure, wherein the pressure relief valve opens when the trigger pressure is exceeded, wherein the adjusting device preferably has a compression spring whose prestress can be adjusted by means of the adjusting device.

8. Filtration system according to any of Claims 5 to 7, **characterized in that** the overflow unit is assigned a detection unit, by means of which opening of the pressure relief valve can be detected, wherein it is preferably possible for each opening operation to be transmitted to a control device.

9. Filtration system according to any of Claims 1 to 6, **characterized in that** an oil sump (190) is interposed in the oil circuit between the marine unit and the feed line, wherein the second valve outlet (143) of the multi-way valve in the treatment branch opens directly into the feed line (103) upstream of the main pump (122).

10. Filtration system according to any of Claims 1 to 6, **characterized in that** an oil sump (290) is interposed in the oil circuit between the marine unit and the feed line, wherein the second valve outlet (243) of the multi-way valve (240) in the treatment branch opens directly into the oil sump (290), to which the feed line (203) provided with the main pump is also connected.

11. Filtration system according to any of the preceding claims, **characterized in that** the main filter or the main filter units has/have one or more filter elements having a filter medium (6) of at least β₆ ≥ 8, or β₆ ≥ 10, and/or **in that** the treatment filter has a filter element having a filter medium (36) of at least β₆ ≥ 8, or β₆ ≥ 10, preferably of β₆ ≥ 75.

12. Filtration system according to Claim 5, or according to Claim 5 and at least one further preceding claim, **characterized in that** the protective filter (53) has a filter medium with a filter fineness of ≤ 25 mm (micrometres).

13. Filtration system according to any of the preceding claims, **characterized in that** the main filter or each main filter unit has a filter cartridge (66) having, as a backflush device, a backflushing member (68) which is arranged in the interior of the filter cartridge in such a way that it can be rotated about a central axis of the filter cartridge, wherein the backflushing member is preferably coupled to a rotary drive (70), in particular an electric motor as a rotary drive.

14. Filtration system according to Claims 2 and 13, or according to Claims 2 and 13 and at least one further of the preceding claims, **characterized in that** the rotary drive (70), or a control device for the rotary drive, is coupled to the flushing valve or flushing valves in such a way that the duration of opening of the flushing valve per opening operation is matched to the duration of rotation of a 360° rotation of the backflushing member (68) in the filter cartridge (66).

15. Filtration system according to any of the preceding claims, **characterized in that** the treatment filter (31) has or forms a sedimentation chamber and preferably has a replaceable filter basket (75) closed at the bottom, an inflow opening arranged above the filter basket, and a collecting space (76) for flush oil filtrate surrounding the filter basket.

## Patentansprüche

1. Filtrationssystem für die Filtration von Öl insbesondere für Schiffsaggregate wie Schiffsmotoren in einem eine Hauptpumpe (22; 122; 222) aufweisenden Ölkreislauf, mit wenigstens einem in einer Zuführleitung des Ölkreislaufs angeordneten rückspülbaren Hauptfilter (4; 104; 204), der ein Filtergehäuse mit Öleinlass, Filtratauslass und Rückspülauslass sowie einer Rückspüleinrichtung aufweist, mit einer Filtratleitung (9; 109; 209) für gefiltertes Ölfiltrat zwischen Filtratauslass (7) und Schiffsaggregat (1; 101; 201), mit einem Aufbereitungszweig für Rückspülfluid, der am Rückspülauslass (8A) angeschlossen ist und wenigstens einen Aufbereitungsfilter (31; 131; 231) mit Filtergehäuse (32), Fluideinlass (35) und Fluidauslass (37) aufweist, mit mehreren schaltbaren Schaltventilen und mit wenigstens einer Pumpe (25; 124) im Aufbereitungszweig zwischen Rückspülauslass und Fluideinlass, **dadurch gekennzeichnet, dass** der Fluidauslass (37) des Aufbereitungsfilter (31; 131; 231) an die Filtratleitung (9; 109; 209) angeschlossen ist und im Aufbereitungszweig (30; 130; 230) zwischen der wenigstens einen Pumpe (25; 125) des Aufbereitungszweigs und dem Einlass (35) des Aufbereitungsfilter ein schaltbares Mehrwegeventil (40; 140; 240) mit einem Ventileinlass (41) sowie wenigstens einem ersten Ventilauslass (42) und einem zweiten Ventilauslass (43; 143; 243) angeordnet ist, wobei der erste Ventilauslass (42) des Mehrwegeventils an den Fluideinlass (35) des Aufbereitungsfilters (31) und der zweite Ventilauslass (43; 143; 243) an die Zuführleitung (3; 103; 203) stromaufwärts des Hauptfilters (4), stromaufwärts der Hauptpumpe (22; 122) und stromabwärts hinter einem geeigneten Absperrorgan - oder Rückflusssperrorgan (24; 199) ist.

2. Filtrationssystem nach Anspruch 1, **dadurch gekennzeichnet, dass** der rückspülbare Hauptfilter (4) eine erste Hauptfiltereinheit (4A; 104A; 204A) mit Rückspüleinrichtung und eine zweite Hauptfiltereinheit (4B; 104B; 204B) mit Rückspüleinrichtung aufweist, wobei die Rückspüleinrichtungen der Hauptfiltereinheiten separaten Rückspülauslässen (8A; 8B) zugeordnet sind, und jeder Rückspülauslass mittels einer mit einem schaltbaren Spülventil (11A; 11B) versehenen Spülleitung (12A; 12B) stromaufwärts der Pumpe an den Aufbereitungszweig (30; 130; 230) angeschlossen ist.

3. Filtrationssystem nach Anspruch 2, **dadurch gekennzeichnet, dass** mittels einer Steuereinheit (45; 245) sichergestellt ist, dass im laufenden Betrieb zu jedem Betriebszeitpunkt wenigstens eines der beiden schaltbaren Spülventile (11A; 11B) geschlossen ist.

4. Filtrationssystem nach einem der Ansprüche 1 bis 3, **dadurch gekennzeichnet, dass** der Hauptfilter (4) oder jede Hauptfiltereinheit (4A; 4B) als Intervallspüler ausgeführt sind, wobei vorzugsweise eine Rückspülung nur bei geöffnetem zugeordnetem Spülventil (11A; 11B) stattfindet.

5. Filtrationssystem nach einem der Ansprüche 1 bis 4, **dadurch gekennzeichnet, dass** dem Hauptfilter bzw. den Hauptfiltereinheiten ein Bypasszweig (51) mit einem Schutzfilter (53) und einer Überströmeinheit mit Überdruckventil (52) zugeordnet ist, wobei der Bypasszweig (51) stromabwärts von Schutzfilter (53) und Überströmeinheit in die Filtratleitung (9) mündet.

6. Filtrationssystem nach Anspruch 5, **dadurch gekennzeichnet, dass** dem Hauptfilter oder den Hauptfiltereinheiten eine Differenzdrucküberwachungseinrichtung zugeordnet ist, wobei das Überdruckventil der Überströmeinheit in Abhängigkeit von dem mittels der Differenzdrucküberwachungseinrichtung festgestellten Differenzdruck ansteuerbar ist oder angesteuert wird und bei Übersteigen eines voreingestellten Differenzdrucks öffenbar ist bzw. geöffnet wird.

7. Filtrationssystem nach Anspruch 5, **dadurch gekennzeichnet, dass** das Überdruckventil der Überströmeinheit eine Einstelleinrichtung für einen Auslösedruck aufweist, wobei bei Übersteigen des Auslösedrucks das Überdruckventil öffnet, wobei vorzugsweise die Einstelleinrichtung eine Druckfeder aufweist, deren Vorspannung mittels der Einstelleinrichtung verstellbar ist.

8. Filtrationssystem nach einem der Ansprüche 5 bis 7, **dadurch gekennzeichnet, dass** der Überströmeinheit eine Detektionseinheit zugeordnet ist, mit der ein Öffnen des Überdruckventils detektierbar ist, wobei vorzugsweise jeder Öffnungsvorgang an eine Steuereinrichtung übermittelbar ist.

9. Filtrationssystem nach einem der Ansprüche 1 bis 6, **dadurch gekennzeichnet, dass** im Ölkreislauf zwischen Schiffsaggregat und Zuführleitung ein Ölsumpf (190) zwischengeschaltet ist, wobei der zweite Ventilausgang (143) des Mehrwegeventils im Aufbereitungszweig unmittelbar in die Zuführleitung (103) stromaufwärts der Hauptpumpe (122) mündet.

10. Filtrationssystem nach einem der Ansprüche 1 bis 6, **dadurch gekennzeichnet, dass** im Ölkreislauf zwischen Schiffsaggregat und Zuführleitung ein Ölsumpf (290) zwischengeschaltet ist, wobei der zweite Ventilausgang (243) des Mehrwegeventils (240) im Aufbereitungszweig unmittelbar in den Ölsumpf (290) mündet, an welchen auch die mit der Hauptpumpe versehene Zuführleitung (203) angeschlossen ist.

11. Filtrationssystem nach einem der vorhergehenden Ansprüche, **dadurch gekennzeichnet, dass** der Hauptfilter oder die Hauptfiltereinheiten ein oder mehrere Filterelemente mit einem Filtermedium (6) mit mindestens β₆ ≥ 10 aufweisen, und/oder das der Aufbereitungsfilter ein Filterelement mit einem Filtermedium (36) mit mindestens β₆ ≥ 10, vorzugsweise mit β₆ ≥ 75 aufweist.

12. Filtrationssystem nach Anspruch 5, oder nach Anspruch 5 und wenigstens und einem weiteren vorhergehenden Anspruch, **dadurch gekennzeichnet, dass** der Schutzfilter (53) ein Filtermedium mit einer Filter-Feinheit von ≤ 25 mm (Mikrometer) aufweist.

13. Filtrationssystem nach einem der vorhergehenden Ansprüche, **dadurch gekennzeichnet, dass** der Hauptfilter oder jede Hauptfiltereinheit eine Filterkerze (66) mit einem im Innern der Filterkerze drehbar um eine Mittelachse der Filterkerze angeordneten Rückspülglied (68) als Rückspüleinrichtung aufweist, wobei vorzugsweise das Rückspülglied mit einem Drehantrieb (70), insbesondere einem Elektromotor als Drehantrieb, gekoppelt ist.

14. Filtrationssystem nach Anspruch 2 und 13, oder nach Anspruch 2 und 13 sowie wenigstens einem weiteren der vorhergehenden Ansprüche, **dadurch gekennzeichnet, dass** der Drehantrieb (70), oder eine Steuereinrichtung für den Drehantrieb, derart mit dem Spülventil oder den Spülventilen gekoppelt ist, dass die Öffnungsdauer des Spülventils je Öffnungsvorgang an die Umlaufdauer einer 360°-Drehung des Rückspülglieds (68) in der Filterkerze (66) angepasst ist.

15. Filtrationssystem nach einem der vorhergehenden Ansprüche, **dadurch gekennzeichnet, dass** der Aufbereitungsfilter (31) eine Sedimentationskammer aufweist oder bildet und vorzugsweise einen auswechselbaren, am Boden geschlossenen Filterkorb (75), eine oberhalb des Filterkorb angeordnete Einströmöffnung sowie einen den Filterkorb umgebenden Sammelraum (76) für Spülöl-Filtrat aufweist.

## Revendications

1. Système de filtration pour la filtration d'huile, en particulier pour des unités marines telles que des moteurs marins, dans un circuit d'huile ayant une pompe principale (22 ; 122 ; 222), comprenant au moins un filtre principal à rétro-rinçage (4 ; 104 ; 204), qui est disposé dans une conduite d'alimentation du circuit d'huile et qui a un boîtier de filtre avec une entrée d'huile, une sortie de filtrat et une sortie de rétro-rinçage ainsi qu'un dispositif de rétro-rinçage, comprenant une ligne de filtrat (9 ; 109 ; 209) pour le filtrat d'huile filtrée entre la sortie de filtrat (7) et l'unité marine (1 ; 101 ; 201), comprenant une branche de traitement pour le fluide de rétro-rinçage, qui est connectée à la sortie de rétro-rinçage et possède au moins un filtre de traitement (31 ; 131 ; 231) avec un boîtier de filtre (32), une entrée de fluide (35) et une sortie de fluide (37), comprenant une pluralité de vannes de commutation commutables et comprenant au moins une pompe (25 ; 124) dans la branche de traitement entre la sortie de rétro-rinçage et l'entrée de fluide, **caractérisé en ce que** la sortie de fluide (37) du filtre de traitement (31 ; 131 ; 231) est connectée à la ligne de filtrat (9 ; 109 ; 209), et une vanne multivoie commutable (40 ; 140 ; 240) ayant une entrée de vanne (41) ainsi qu'au moins une première sortie de vanne (42) et une seconde sortie de vanne (43 ; 143 ; 243) est disposée dans la branche de traitement (30 ; 130 ; 230) entre l'au moins une pompe (25 ; 125) dans la branche de traitement et l'entrée de fluide ; 125) dans la branche de traitement et l'entrée de fluide (35) du filtre de traitement, la première sortie de vanne (42) de la vanne multivoie étant reliée à l'entrée de fluide (35) du filtre de traitement (31), et la deuxième sortie de vanne (43 ; 143 ; 243) étant reliée à la conduite d'alimentation (3 ; 103 ; 203) en amont du filtre principal (4), en amont de la pompe principale (22 ; 122) et en aval d'un élément d'arrêt ou de blocage de reflux approprié (24 ; 199).

2. Système de filtration selon la revendication 1, **caractérisé en ce que** le filtre principal à rétro-rinçage (4) comporte une première unité de filtre principal (4A ; 104A ; 204A) dotée d'un dispositif de rétro-rinçage et une deuxième unité de filtre principal (4B ; 104B ; 204B) dotée d'un dispositif de rétro-rinçage, les dispositifs de rétro-rinçage des unités de filtrage principales étant affectés à des sorties de rétro-rinçage distinctes (8A ; 8B), et chaque sortie de rétro-rinçage étant reliée à la branche de traitement (30 ; 130 ; 230) en amont de la pompe au moyen d'une conduite de rinçage (12A ; 12B), dotée d'une vanne de rinçage commutable (11A ; 11B).

3. Système de filtration selon la revendication 2, **caractérisé en ce que** une unité de commande (45 ; 245) est utilisée pour garantir qu'au moins une des deux vannes de rinçage commutables (11A ; 11B) est fermée à tout moment de l'opération pendant le fonctionnement.

4. Système de filtration selon l'une des revendications 1 à 3, **caractérisé en ce que** le filtre principal (4) ou chaque unité de filtration principale (4A ; 4B) est conçu comme un purgeur intermittent, dans lequel le rétro-rinçage n'a lieu de préférence que lorsque la vanne de purge associée (11A ; 11B) est ouverte.

5. Système de filtration selon l'une des revendications 1 à 4, **caractérisé en ce que** le filtre principal ou les unités de filtration principales sont dotés d'une branche de dérivation (51) contenant un filtre de protection (53) et une unité de débordement dotée d'une soupape de décharge (52), la branche de dérivation (51) débouchant dans la conduite de filtrat (9) en aval du filtre de protection (53) et de l'unité de débordement.

6. Système de filtration selon la revendication 5, **caractérisé en ce que** un dispositif de surveillance de la pression différentielle est affecté au filtre principal ou aux unités de filtration principales, dans lequel la soupape de décharge de l'unité de débordement peut être ou est activée en fonction de la pression différentielle déterminée au moyen du dispositif de surveillance de la pression différentielle et peut être ou est ouverte lorsqu'une pression différentielle prédéfinie est dépassée.

7. Système de filtration selon la revendication 5, **caractérisé en ce que** la soupape de décharge de l'unité de débordement comporte un dispositif de réglage pour une pression de déclenchement, dans lequel la soupape de décharge s'ouvre lorsque la pression de déclenchement est dépassée, le dispositif de réglage comportant de préférence un ressort de compression dont la précontrainte peut être réglée au moyen du dispositif de réglage.

8. Système de filtration selon l'une des revendications 5 à 7, **caractérisé en ce que l**'unité de débordement est dotée d'une unité de détection, au moyen de laquelle l'ouverture de la soupape de décharge peut être détectée sur , où il est de préférence possible de transmettre chaque opération d'ouverture à un dispositif de commande.

9. Système de filtration selon l'une des revendications 1 à 6, **caractérisé en ce que** un carter d'huile (190) est interposé dans le circuit d'huile entre l'unité marine et la conduite d'alimentation, dans lequel la deuxième sortie (143) de la vanne multivoie dans la branche de traitement débouche directement dans la conduite d'alimentation (103) en amont de la pompe principale (122).

10. Système de filtration selon l'une des revendications 1 à 6, **caractérisé en ce que** un carter d'huile (290) est interposé dans le circuit d'huile entre l'unité marine et la conduite d'alimentation, la deuxième sortie (243) de la vanne multivoie (240) dans la branche de traitement débouchant directement dans le carter d'huile (290), auquel la conduite d'alimentation (203) équipée de la pompe principale est également reliée.

11. Système de filtration selon l'une quelconque des revendications précédentes, **caractérisé en ce que** le filtre principal ou les unités de filtration principales a/ont un ou plusieurs éléments filtrants ayant un milieu filtrant (6) d'au moins β₍₆₎ ≥ 8, ou β₍₆₎ ≥ 10, et/ou **en ce que** le filtre de traitement a un élément filtrant ayant un milieu filtrant (36) d'au moins β₍₆₎ ≥ 8, ou β₍₆₎ ≥ 10, de préférence de β₍₆₎ ≥ 75.

12. Système de filtration selon la revendication 5, ou selon la revendication 5 et au moins une autre revendication précédente, **caractérisé en ce que** le filtre de protection (53) présente un média filtrant d'une finesse de filtration ≤ 25 mm (micromètres).

13. Système de filtration selon l'une quelconque des revendications précédentes, **caractérisé en ce que** le filtre principal ou chaque unité de filtre principal comporte une cartouche filtrante (66) ayant, comme dispositif de rétro-rinçage, un élément de rétro-rinçage (68) qui est disposé à l'intérieur de la cartouche filtrante de manière à pouvoir tourner autour d'un axe central de la cartouche filtrante, l'élément de rétro-rinçage étant de préférence couplé à un entraînement rotatif (70), en particulier un moteur électrique en tant qu'entraînement rotatif.

14. Système de filtration selon les revendications 2 et 13, ou selon les revendications 2 et 13 et au moins une autre des revendications précédentes, **caractérisé en ce que** l'entraînement rotatif (70), ou un dispositif de commande de l'entraînement rotatif, est couplé à la ou aux vannes de rinçage de telle sorte que la durée d'ouverture de la vanne de rinçage par opération d'ouverture est adaptée à la durée de rotation d'une rotation de 360° de l'élément de rétro-rinçage (68) dans la cartouche filtrante (66).

15. Système de filtration selon l'une quelconque des revendications précédentes, **caractérisé en ce que** le filtre de traitement (31) possède ou forme une chambre de sédimentation et possède de préférence un panier filtrant remplaçable (75) fermé au fond, une ouverture d'entrée disposée au-dessus du panier filtrant, et un espace de collecte (76) pour le filtrat d'huile de rinçage entourant le panier filtrant.
